# NEUE EUROPÄISCHE PATENTSCHRIFT

(11) **EP 2 089 490 B2**
(45) Veröffentlichungstag und Bekanntmachung des Hinweises auf die Entscheidung über den Einspruch: **04.01.2017**
(45) Hinweis auf die Patenterteilung: 15.09.2010
(21) Anmeldenummer: 07787732.2
(22) Anmeldetag: 19.07.2007
(51) Int. Cl.: C09J 183/00

(54) **SILYLGRUPPEN ENTHALTENDE MISCHUNG VON PREPOLYMEREN UND DEREN VERWENDUNG**
PREPOLYMER MIXTURE CONTAINING SILYL GROUPS AND USE THEREOF
MÉLANGES DE PRÉPOLYMÈRES CONTENANT DES GROUPES SILYLE ET LEUR UTILISATION

(30) Priorität: 14.12.2006 DE 102006059473
(43) Veröffentlichungstag der Anmeldung: 19.08.2009
(73) Patentinhaber: Henkel AG & Co. KGaA, 40589 Düsseldorf (DE)
(72) Erfinder: KOHL, Matthias, 69469 Weinheim (DE); PRÖBSTER, Manfred, 69226 Nussloch (DE)
(86) Internationale Anmeldenummer: PCT/EP2007/057474
(87) Internationale Veröffentlichungsnummer: WO 2008/071461

(56) Entgegenhaltungen:
- EP-A- 1 462 500
- EP-A- 1 724 321
- EP-A1- 0 949 310
- EP-A1- 1 279 709
- EP-A1- 1 462 500
- WO-A-01/12693
- WO-A1-2004/019421
- US-A1- 6 703 442
- US-A1- 2004 071 977
- US-B1- 6 204 350

## Beschreibung

Die vorliegende Erfindung betrifft Zusammensetzungen enthaltend eine Mischung von silanfunktionellen Polymeren bzw. Prepolymeren und deren Verwendung als feuchtigkeitshärtende Kleb- und Dichtstoffe.

Feuchtigkeitshärtende elastische Kleb- und Dichtstoffe werden in weiten Bereichen der Industrie und des Handwerks verwendet. Mit der Zunahme an zu verklebenden Untergründen und mit den gestiegenen Anforderungen an die Verklebungen/Abdichtungen kommt es immer häufiger zum Versagen bekannter Kleb-/Dichtstoffsysteme. Abhilfe kann die Verwendung von Voranstrichen (Primem) und/oder aktiven Reinigern sowie andere Methoden der Oberflächenvorbehandlung wie Coronabehandlung, Plasmabehandlung, Beflammung usw., schaffen. Die Vorbehandlung von Oberflächen vor dem Klebe-/Dichtprozess ist ein zusätzlicher Arbeitsschritt, der häufig aufwendig, kostspielig oder gar nicht durchführbar ist. Neben den Polyurethan-Kleb- und Dichtstoffen mit freien Isocyanat-Gruppen und den traditionellen Silikon-Kleb- und Dichtstoffen auf der Basis von Dimethylpolysiloxanen sind in letzter Zeit auch verstärkt die so genannten modifizierten Silan-Kleb- und Dichtstoffe eingesetzt worden. Bei der letztgenannten Gruppe ist der Hauptbestandteil des Polymerrückgrates ein Polyether und die reaktiven und vernetzungsfähigen Endgruppen sind Alkoxysilylgruppen. Gegenüber den Polyurethan-Kleb- und Dichtstoffen weisen diese silanmodifizierten Kleb- und Dichtstoffe den Vorteil der Freiheit von Isocyanatgruppen, insbesondere von monomeren Diisocyanaten auf. Sie zeichnen sich weiterhin durch ein relativ breites Haftspektrum auf einer Vielzahl von Substraten ohne Oberflächenvorbehandlung durch Primern aus.

US 4,222,925 A und US 3,979,344 A beschreiben bei Raumtemperatur härtbare siloxanterminierte organische Dichtstoffzusammensetzungen auf der Basis von Umsetzungsprodukten von Isocyanat-terminierten Polyurethan-Prepolymeren mit 3-Aminopropyltrimethoxysilan beziehungsweise 2-Aminoethyl-, 3-Aminopropylmethoxysilan zu isocyanatfreien siloxanterminierten Prepolymeren. Kleb- und Dichtstoffe auf der Basis dieser Prepolymeren weisen jedoch unbefriedigende mechanische Eigenschaften, insbesondere in Bezug auf ihre Dehnung und Reißfestigkeit auf.

Weitere Herstellverfahren und die Verwendung von silanterminierten Prepolymeren in Kleb-/Dichtstoffanwendungen sind beispielsweise in den folgenden Patentschriften genannt: US-A-3971751, EP-A-70475, DE-A-19849817, US-A-6124387 US-A-5990257 US-A-4960844, US-A-3979344, US-A-3632557, DE-A-4029504, EP-A-601021, oder EP-A-370464.

WO 02/34838 A1 beschreibt ein Verfahren zur Herstellung von Verbindungen mit mindestens einer Harnstoffgruppe und mindestens einer Silylgruppe, bei dem eine Verbindung mit mindestens einer Aminogruppe mit einem Carbamat umgesetzt wird, wobei entweder die Verbindung mit mindestens einer Aminogruppe oder das Carbamat eine Silylgruppe aufweist. Die so hergestellten Verbindungen eignen sich für die Herstellung von Oberflächenbeschichtungsmitteln, Dichtstoffen, Klebstoffen sowie Montage- und Isolierschäumen.

DE 10237271 A1 beschreibt Polymermassen auf Basis von alkoxysilanterminierten Polymeren mit regulierbarer Härtungsgeschwindigkeit. Dazu wird unter anderem offenbart, Polypropylenglykole in einem ersten Schritt mit Isocyanaten zu einem OH-terminierten Polyurethan-Prepolymer umzusetzen und dieses anschließend mit Isocyanatomethyl-methyldimethoxysilan zu versetzen, bis IR-spektroskopisch keine Isocyanatbande mehr zu sehen ist. Das derartig hergestellte Polymer soll dann bei Raumtemperatur mit Weichmacher, Vinyltrimethoxysilan und getrockneter Kreide zu einer standfesten Paste verarbeitet werden. Nach Zusatz von 3-(2-Aminoethyl)aminopropyltrimethoxysilan als Katalysator wird eine schnell härtende Polymermasse erhalten. Weiterhin offenbart diese Schrift die Herstellung eines isocyanatgruppenhaltigen Prepolymers aus einem Polypropylenglycol und einem Diisocyanat, wobei in erster Stufe ein isocyanatgruppenhaltiges Prepolymer entsteht, dass anschließend mit Vinyltrimethoxysilan als Reaktivverdünner versetzt werden soll und anschließend mit N-Phenylaminomethyl-trimethoxysilan so umgesetzt wird, dass IR-spektroskopisch keine Isocyanatgruppen mehr nachweisbar sind. Die derartig hergestellte Prepolymermischung soll sich mit weiteren Komponenten compoundieren lassen.

EP 1158026 A1 beschreibt eine härtbare Zusammensetzung enthaltend 100 Gew.-Teile eines gesättigten Kohlenwasserstoffpolymers mit mindestens einer Silicium enthaltenen Gruppe, die mindestens eine Hydroxyl- oder hydrolysierbare Gruppe an das Siliciumatom gebunden hat, wodurch dieses Polymer unter Bildung von Siloxanbindungen vernetzbar ist. Weiterhin soll die Zusammensetzung 1 bis 100 Gew.-Teile einer Verbindung enthalten, die mindestens eine Epoxidgruppe an ihrem Kettenende hat. Weiterhin enthält diese Zusammensetzung 1 bis 100 Gew.-Teile Glimmer und ggf. ein paraffinisches Kohlenwasserstofföl. Weitere gängige Additive für Dichtmaterialien wie Alterungsschutzmittel und Füllstoffe sollen ggf. in die härtbare Zusammensetzung gemischt werden.

Angesichts dieses Standes der Technik haben sich die Erfinder die Aufgabe gestellt, einkomponentige Zusammensetzungen bereitzustellen, die als feuchtigkeitshärtende elastische Kleb-/Dichtstoff oder Beschichtungsmittel einsetzbar sind und dabei auf Kunststoffsubstraten, und lackierten Substraten ohne Vorbehandlung der Substratoberfläche eine sehr gute Haftung auch nach Feuchtigkeitslagerung aufweisen.

Die erfindungsgemäße Lösung der Aufgabe ist den Patentansprüchen zu entnehmen. Sie besteht im wesentlichen in der Bereitstellung einer einkomponentigen, feuchtigkeitshärtenden Kleb-/Dichtstoffzusammensetzung, die mindestens ein silanfunktionelles Polyoxyalkylen-Prepolymer und mindestens ein silanfunktionelles Polyolefin und mindestens einen unpolaren Weichmacher enthält, wobei das mindestens eine silanfunktionelle Polyoxyalkylen-Prepolymer auf der Basis von Polyethern ist.

In weiteren bevorzugten Ausführungsformen enthält die erfindungsgemäße Zusammensetzung noch mindestens ein paraffinisches, naphthenisches und/oder aromatisches Petroleumöl und/oder mindestens einen Katalysator sowie ggf. mindestens einen Füllstoff und/oder mindestens einen Haftvermittler.

Ein weiterer Gegenstand der vorliegenden Erfindung ist die Verwendung der Kleb- / Dichtststoff-Zusammensetzung zur Verklebung und/oder Beschichtung und/oder Abdichtung von Kunststoffbauteilen oder lackierten Substraten ohne Vorbehandlung dieser Substrate.

Als "silanfunktionelle Polyoxyalkylen-Prepolymere" im Sinne dieser Erfindung werden dabei Prepolymere auf der Basis von Polyethem bezeichnet. Diese silanterminierten Prepolymere auf der Basis von Polyethern können prinzipiell auf verschiedene Weise hergestellt werden:
- hydroxyfunktionelle Polyether werden mit ungesättigten Chlorverbindungen, z.B. Allylchlorid, in einer Ethersynthese in Polyether mit endständigen olefinischen Doppelbindungen umgesetzt, die ihrerseits mit Hydrosilanverbindungen, die hydrolysierbare Gruppen haben, wie z.B. HSi(OCH₃)₃ in einer Hydrosilylierungsreaktion unter dem katalytischen Einfluss von beispielsweise Übergangsmetallverbindungen der 8. Gruppe zu silanterminierten Polyethern umgesetzt werden.
- In einem anderen Verfahren werden die olefinisch ungesättigte Gruppen enthaltenden Polyether mit einem Mercaptosilan wie z.B. 3-Mercaptopropyltrialkoxysilan umgesetzt.
- Bei einem weiteren Verfahren werden zunächst Hydroxylgruppen-haltige Polyether mit Di- oder Polyisocyanaten umgesetzt, die dann ihrerseits mit aminofunktionellen Silanen oder mercaptofunktionellen Silanen zu silanterminierten Prepolymeren umgesetzt werden.

Eine weitere Möglichkeit sieht die Umsetzung von hydroxyfunktionellen Polyethern mit isocyanatofunktionellen Silanen vor. Für diese Umsetzung geeignete Isocyanatgruppen tragende Silane sind beispielsweise Methyldimethoxysilylmethylisocyanat, Trimethoxysilylmethylisocyanat, Diethylmethoxysilylmethylisocyanat, Ethyldimethoxysilylmethylisocyanat, Methyldiethoxysilylmethylisocyanat, Triethoxysilylmethylisocyanat, Ethyldiethoxysilylmethylisocyanat, Methyldimethoxysilylethylisocyanat, Trimethoxysilylethylisocyanat, Ethyldimethoxysilylethylisocyanat, Methyldiethoxysilylethylisocyanat, Triethoxysilylethylisocyanat, Ethyldiethoxysilylethylisocyanat, Methyldimethoxysilylpropylisocyanat, Trimethoxysilylpropylisocyanat, Ethyldimethoxysilylpropylisocyanat, Methyldiethoxysilylpropylisocyanat, Triethoxysilylpropylisocyanat, Ethyldiethoxysilylpropylisocyanat, Methyldimethoxysilylbutylisocyanat, Trimethoxysilylbutylisocyanat, Triethylsilylbutylisocyanat, Diethylmethoxysilylbutylisocyanat, Ethyldimethoxysilylbutylisocyanat, Methyldiethoxysilylbutylisocyanat, Triethoxysilylbutylisocyanat, Diethylethoxysilylbutylisocyanat, Ethyldiethoxysilylbutylisocyanat, Methyldimethoxysilylpentylisocyanat, Trimethoxysilylpentylisocyanat, Triethylsilylpentylisocyanat, Ethyldimethoxysilylpentylisocyanat, Methyldiethoxysilylpentylisocyanat, Triethoxysilylpentylisocyanat, Diethylethoxysilylpentylisocyanat, Ethyldiethoxysilylpentylisocyanat, Methyldimethoxysilylhexylisocyanat, Trimethoxysilylhexylisocyanat, Ethyldimethoxysilylhexylisocyanat, Methyldiethoxysilylhexylisocyanat, Triethoxysilylhexylisocyanat, Ethyldiethoxysilylhexylisocyanat, γ-Trimethoxysiloxydimethylsilylpropylisocyanat, γ-Trimethylsiloxydimethoxysilylpropylisocyanat, γ-Triethoxysiloxydiethylpropylisocyanat, oder γ-Triethoxysiloxydiethoxysilylpropylisocyanat. Anstelle der Methoxysilane werden aus arbeitshygienischen Gründen deren Ethoxy- oder Propoxyanaloga bevorzugt.

Als "silanfunktionelles Polyolefin" können vorzugsweise silanfunktionelle Poly-α-Olefine, silanfunktionelle Polyisobutylene oder silanfunktionelle teilkristalline Polyolefinwachse eingesetzt werden.

Weitgehend amorphe Poly-α-Olefine sind beispielsweise ataktisches Polypropylen, ataktisches Poly-1-Buten, Ethen-Propen-Copolymere, Ethen-1-Buten-Copolymere, Ethen-Propen-1-Buten-Copolymere, Ethen-Propen-1-Hexen-Copolymere, Ethen-Propen-1 -Octen-Terpolymere, Ethen-1-Buten-1-Hexen-Terpolymere, Ethen-1-Buten-1-Octen-Terpolymere, Ethen-1-Hexen-1-Octen-Terpolymere, Propen-1-Buten-1-Hexen-Terpolymere, Propen-1-Buten-1-Octen-Terpolymere oder Propen-1-Hexen-1-Okten-Terpolymere. Diese können gemäß der Lehre der EP 940439 A1 mit Silanverbindungen gepfropft werden, dazu soll das aufzupfropfende Silan vorzugsweise 3 direkt mit dem Silicium verbundene Alkoxygruppen aufweisen. Derartige Silanverbindungen die zur Pfropfung geeignet sind, sind beispielsweise Vinyl-trimethoxysilan, Vinyl-triethoxysilan, Vinyl-tris-(2-methoxy-ethoxy)-silan, 3-methacryloxypropyltrimethoxysilan, 3-methacryloxypropyltriethoxysilan, Vinyldimethylmethoxysilan oder Vinylmethyldibutoxysilan. Das Silan soll bei der Pfropfung üblicherweise in Mengen zwischen 0,1 bis 10 Gew.-%, bezogen auf das Polyolefin eingesetzt werden.

Die Herstellung der erfindungsgemäß zu verwendenden silanfunktionellen Polyisobutylen und/oder silanfunktionellen Polybutadiene ist im Prinzip bekannt, typischerweise werden Isobuten- (Isobutylen-) Monomer und geeignete Comonomere in einer ionischen Polymerisation mit Hilfe von Lewis-Säuren umgesetzt und am Ende der Polymerisation so mit geeigneten Silanen umgesetzt, so dass im wesentlichen telechele silanfunktionelle Polyisobutylen-Homopolymere oder Copolymere entstehen. Die Herstellung dieser Polymeren, die typischerweise ein Molekulargewicht (Mₙ) zwischen 1000 und 50000 aufweisen, werden beispielsweise in der DE 10209404 A1, EP 452875 A1, EP 537660 A1, EP 1134251 A1 und EP 856450 A1 beschrieben.

Erfindungsgemäß zu verwendende silanfunktionelle teilkristalline Polyolefinwachse sind ebenfalls bekannt. Vorzugsweise werden die einsetzbaren Polyolefinwachse unter Verwendung eines Metallocenkatalysators aus Propylen, Ethylen und ggf. Zusätzen eines C₄-C₁₀-1-Olefins hergestellt und anschließend in einer Pfropfungsreaktion mit einem Alkoxyvinylsilan funktionalisiert. Derartige silanmodifizierte teilkristalline Polyolefinwachse haben naturgemäß die Silanfunktionalität statistisch entlang der Polymerkette verteilt. Erfindungsgemäß einzusetzende Silanmodifizierte Polyolefinwachse werden beispielsweise in der EP 1508579 A1 beschrieben.

Die erfindungsgemäßen Kleb-/Dichtstoff-Zusammensetzungen können neben den drei vorgenannten Bindemittelkomponenten noch Katalysatoren, Haftvermittler, Füllstoffe, Pigmente, Alterungsschutzmittel und/oder Rheologiehilfsmittel enthalten.

Als unpolare Weichmacher bzw. Extenderöle eignen sich insbesondere aliphatische aromatische oder naphthenische Petroleumöle, wie sie beispielsweise aus der WO 2004/009738 A1 bekannt sind. Derartige geeignete Extenderöle oder Prozessöle haben beispielsweise einen Stockpunkt von -30 bis -50°C und eine kinematische Viskosität (DIN 51562) von 5 bis 8 mm²/s bei 40°C.

Als Haftvermittler werden vorzugsweise organofunktionelle Silane wie hydroxyfunktionelle, (meth)acryloxyfunktionelle, mercaptofunktionelle, aminofunktionelle oder epoxyfunktionelle Silane verwendet. Beispiele für mercaptofunktionelle Silane sind das 3-Mercaptopropyltrimethoxysilan oder das 3-Mercaptopropyltrimethoxysilan oder deren Alkyldimethoxy- oder Alkyldiethoxy-Analoga. Beispiele für (meth)acryloxyfunktionelle Silane sind 3-Acryloxypropyltrialkoxysilan, 3-Methacryloxypropyltrialkoxysilan, oder deren Alkyldialkoxy- Analoga, wobei die Alkoxygruppen vorzugsweise Methoxy- oder, besonders bevorzugt, Ethoxy-Gruppen sind.
Als Beispiele für aminofunktionelle Silane seien genannt: 3-Aminopropyltrimethoxysilan (AMMO), 3-Aminopropyltriethoxysilan (AMEO), 3-Aminopropylmethyldimethoxysilan, 3-Aminopropylmethyldiethoxysilan, N-(2-Aminoethyl)-3-aminopropyltrimethoxysilan (DAMO), N-(2-Aminoethyl)-3-aminopropyltriethoxysilan, N-(2-Aminoethyl)-3-aminopropylmethyldimethoxysilan, N-(2-Aminoethyl)-3-aminopropylmethyldiethoxysilan, N,N-Di(2-Aminoethyl)-3-aminopropyltrimethoxysilan, N,N-Di(2-Aminoethyl)-3-aminopropyltriethoxysilan, N,N-Di(2-Aminoethyl)-3-aminopropylmethyldimethoxysilan, N,N-Di(2-Aminoethyl)-3-aminopropylmethyldiethoxysilan, N-(2-Aminoethyl)-N'-(2-aminoethyl)-3-aminopropyltrimethoxysilan, N-(2-Aminoethyl)-N'-(2-aminoethyl)-3-aminopropyltriethoxysilan, N-(2-Aminoethyl)-N'-(2-aminoethyl)-3-aminopropylmethyldimethoxysilan, N-(2-Aminoethyl)-N'-(2-aminoethyl)-3-aminopropylmethyldiethoxysilan, Bis-(Triethoxysilylpropyl)-amin, Bis-(Trimethoxysilylpropyl)-amin, N-{2-Aminobutyl)-3-aminopropyltriethoxysilan, N-(2-Aminobutyl)-3-aminopropyltrimethoxysilan, N-(n-Butyl)-3-aminopropyltrimethoxysilan, N-(n-Butyl)-3-aminopropyltriethoxysilan, N-(n-Buty1)-3-aminopropylalkoxydiethoxysilan, oder Mischungen daraus sowie entsprechende Verbindungen, die anstelle der jeweiligen Propylgruppe eine andere Alkylgruppe tragen. Beispiele hierfür sind Vinylalkoxysilan, (N-Cyclohexylaminomethyl)-methyldiethoxysilan, (N-Cyclohexylaminomethyl)triethoxysilan, (N-Phenylaminomethyl)methyldimethoxysilan, (N-Phenylaminomethyl)trimethoxysilan. Epoxyfunktionelle Silane können ebenfalls aus einer Vielzahl von Verbindungen ausgewählt werden. Beispielhaft genannt seien 3-glycidyloxymethyltrimethoxysilan, 3-glycidyloxymethyltriethoxysilan, 3-glycidoxymethyl-tripropoxysilan, 3-glycidoxymethyl-tributoxysilan, 2-glycidoxyethyltrimethoxysilan, 2-glycidoxyethyltriethoxysilan, 2-glycidoxyethyl-tripropoxysilan, 2-glycidoxyethyl-tributoxysilan, 2-glycidoxyethyltrimethoxysilan, 1-glycidoxyethyl-triethoxysilan, 1-glycidoxyethyltripropoxysilan, 1-glycidoxyethyltributoxysilan, 3-glycidoxypropyl-trimethoxysilan, 3-glycidoxypropyl-triethoxysilan, 3-glycidoxypropyl-tripropoxysilan, 3-glycidoxypropyltributoxysilan, 2-glycidoxypropyl-trimethoxysilan, 2-glycidoxypropyl-triethoxysilan, 2-glycidoxypropyl-tripropoxysilan, 2-glycidoxypropyl-tributoxysilan, 1-glycidoxypropyl-trimethoxysilan, 1-glycidoxypropyl-triethoxysilan, 1-glycidoxypropyltripropoxysilan, 1-glycidoxypropyl-tributoxysilan, 3-glycidoxybutyl-trimethoxysilan, 4-glycidoxybutyl-triethoxysilan, 4-glycidoxybutyl-tripropoxysilan, 4-glycidoxybutyltributoxysilan, 4-glycidoxybutyl-trimethoxysilan, 3-glycidcxybutyl-triethoxysilan, 3-glycidoxybutyl-tripropoxysilan, 3-propoxybutyl-tributoxysilan, 4-glycidoxybutyl-trimethoxysilan, 4-glycidoxybutyl-triethoxysilan, 4-glycidoxybutyl-tripropoxysilan, 1-glycidoxybutyl-trimethoxysilan, 1-glycidoxybutyl-triethoxysilan, 1-glycidoxybutyl-tripropoxysilan, 1-glycidoxybutyl-tributoxysilan, (3,4-epoxycyclohexyl)-methyltrimethoxysilan, (3,4-epoxycyclohexyl)methyl-triethoxysilan, (3,4-epoxycyclohexyl)methyl-tripropoxysilan, (3,4-epoxycyclohexyt)-methyl-tributoxysilan, (3,4-epoxycyclohexyf)ethyl-trimethoxysilan, (3,4-epoxycyclohexyl)ethyl-triethoxysilan, (3,4-epoxycyclohexyl)ethyl-tripropoxysilan, (3,4-epoxycyclohexyl)-ethyl-tributoxysilan, (3,4-epoxycyclohexyl)propyl-trimethoxysilan, (3,4-epoxycyclohexyl)propyltriethoxysilan, (3,4-epoxycyclohexyl)propyl-tripropoxysilan, (3,4-epoxycyclohexyl)propyl-tributoxysilan, (3,4-epoxycyclohexyl)butyl-trimethoxysilan, (3,4-epoxycyclohexyl)butyl-triethoxysilan, (3,4-epoxycyclohexyl)butyl-tripropoxysilan, (3,4-epoxycyclohexyl)butyl-tributoxysilan. Anstelle von oder zusammen mit den vorgenannten Trialkoxysilanen können auch die entsprechenden Alkyldialkoxysilane verwendet werden. Weiterhin können als Haftvermittlerkomponente Kondensate oder Cokondensate der zuvor genannten Aminosilane mit verwendet werden. Dabei können die Kondensate oder Cokondensate auch als partielle Hydrolysate eingesetzt werden, Beispiele hierfür sind DYNASYLAN™ 1146 und 1148 oder die in den Schriften EP 518057 A1, EP 814110 A1 und DE 10212523 A offenbarten Cokondensate.
Die vorgenannten Haftvermittler werden vorzugsweise in der Bindemittelzusammensetzung in Mengen zwischen 0,1 und 10 Gew %, vorzugsweise zwischen 0,5 und 5, besonders bevorzugt zwischen 0,5 und 2 Gew % verwendet.

Als Haftvermittler eignen sich aber auch so genannte Klebrigmacher wie Kohlenwasserstoffharze, Phenolharze, Terpen-Phenolharze, Resorcinharze oder deren Derivate, modifizierte oder unmodifizierte Harzsäuren bzw. -ester (Abietinsäurederivate), Polyamine, Polyaminoamide, Anhydride und Anhydridenthaltende Copolymere. Auch der Zusatz von Polyepoxidharzen in geringen Mengen kann bei manchen Substraten die Haftung verbessern. Hierfür werden dann vorzugsweise die festen Epoxidharze mit einem Molekulargewicht von über 700 in fein gemahlener Form eingesetzt. Falls Klebrigmacher als Haftvermittler eingesetzt werden, hängt deren Art und Menge von der Kleb-/Dichtstoffzusammensetzung ab sowie von dem Substrat, auf welches dieser appliziert wird. Typische klebrigmachende Harze (Tackifier) wie z.B. Terpenphenolharze oder Harzsäurederivate werden in Konzentrationen zwischen 5 und 20 Gew.% verwendet, typische Haftvermittler wie Polyamine, Polyaminoamide oder Phenolharze oder Resorcinderivate werden im Bereich zwischen 0,1 und 10 Gew.% verwendet.
Als Katalysatoren können alle bekannten Verbindungen eingesetzt werden, die die hydrolytische Spaltung der hydrolysierbaren Gruppen der Silangruppierungen sowie die anschließende Kondensation der Si-OH-Gruppe zu Siloxangruppierungen (Vernetzungsreaktion bzw. Haftvermittlungsfunktion) katalysieren können. Beispiele hierfür sind Titanate wie Tetrabutyltitanat und Tetrapropyltitanat; Zinncarboxylate wie Dibutylzinndilaulat, Dibutylzinndiacetat, Dibutylzinndiethylhexanoat, Dibutylzinndioctoat, Dibutylzinndimethylmaleat, Dibutylzinndiethylmaleat, Dibutylzinndibutylmaleat, Dibutylzinndiiosooctylmaleat, Dibutylzinnditridecylmaleat, Dibutylzinndibenzylmaleat, Dibutylzinnmaleat, Dibutylzinndiacetat, Zinnoctaoat, Dioctylzinndistealeat, Dioctylzinndilaulat, Dioctylzinndiethylmaleat, Dioctylzinndiisooctylmaleat, Dioctylzinndiacetat, und Zinnnaphthenoat; Zinnalkoxide wie Dibutylzinndimethoxid, Dibutylzinndiphenoxid, und Dibutylzinndiisoproxid; Zinnoxide wie Dibutylzinnoxid, und Dioctylzinnoxid; Reaktionsprodukte zwischen Dibutylzinnoxiden und Phthalsäureestem, Dibutylzinnbisacetylacetonat; Organoaluminumverbindungen wie Aluminumtrisacetylacetonat, Aluminumtrisethylacetoacetat, und Diisopropoxyaluminumethylacetoacetat; Chelatverbindungen wie Zirconumtetraacetylacetonat, und Titantetraacetylacetonat; Bleioctanoat; Aminverbindungen oder ihre Salze mit Carbonsäuren, wie Butylamin, Octylamin, Laurylamin, Dibutylamine, Monoethanolamine, Diethanolamine, Triethanolamin, Diethylenetriamin, Triethylenetetramin, Oleylamine, Cyclohexylamin, Benzylamin, Diethylaminopropylamin, Xylylenediamin, Triethylenediamin, Guanidin, Diphenylguanidin, 2,4,6-tris(dimethylaminomethyl)phenol, Morpholin, N-methylmorpholin, 2-Ethyl-4-methylimidazole, und 1,8-Diazabicyclo-(5,4,0)-undecen-7 (DBU), ein niedermolekulares Polyamid Harz erhalten aus einem Überschuß eines Polyamins und einer Polybasischen Säure, Addukte aus einem Polyamin im Überschuß mit einem Epoxid, Silanhaftvermittler mit Aminogruppen, wie 3-Aminopropyltrimethoxysilan, und N-(β-aminoethyl)-aminopropylmethyldimethoxysilan.

Die Füllstoffe können aus einer Vielzahl von Materialien ausgewählt werden, insbesondere sind hier zu nennen Kreiden, natürliche oder gemahlene Calciumcarbonate, Calcium-Magnesiumcarbonate, Silikate, Talkum, Schwerspat sowie Ruß. Es kann ggf. zweckmäßig sein, dass zumindest ein Teil der Füllstoffe oberflächenvorbehandelt ist, insbesondere hat sich bei den verschiedenen Calciumcarbonaten bzw. Kreiden eine Beschichtung mit Stearinsäure zur Verminderung der eingetragenen Feuchtigkeit und zur Verminderung der Feuchtigkeitsempfindlichkeit der ausgehärteten Zusammensetzung als zweckmäßig erwiesen. Der Gesamtanteil an Füllstoffen in der Formulierung kann zwischen 0 und 60 Gew.% variieren, der Vorzugsbereich liegt zwischen 30 und 60 Gew.%.

Gegen den thermischen, thermooxidativen oder Ozon - Abbau der erfindungsgemäßen Zusammensetzungen können konventionelle Stabilisatoren oder Alterungsschutzmittel eingesetzt werden, wie z.B. sterisch gehinderte Phenole (beispielsweise 2,2-Methylen-bis-(4-methyl-6-tert.-butylphenol)) und/oder Thioether und/oder substituierten Benzotriazole oder die sterisch gehinderten Amine vom Typ des HALS ("Hindered Amine Light Stabilizer"), typische Mengenbereiche für diese Stabilisatoren sind 0 bis 2,5 Gew.%.

Obwohl die Rheologie der erfindungsgemäßen Zusammensetzungen auch durch die Auswahl der Füllstoffe und das Mengenverhältnis der Prepolymeren in den gewünschten Bereich gebracht werden kann, können konventionelle Rheologiehilfsmittel wie z.B. pyrogene Kieselsäuren, Bentone oder fibrillierte oder Pulp-Kurzfasern oder auch hydrierte Ricinusöl-Derivate - bekannt z.B. unter dem Handelsnamen Rilanit (Fa. Cognis) - im Bereich zwischen 0,1 und 7 Gew.%, vorzugsweise zwischen 1 und 3 Gew.% zugesetzt werden. Außerdem können weitere konventionelle Hilfs- und Zusatzmittel, beispielsweise Pigmente wie Titandioxid, Russ, Eisenoxide oder andere anorganische Farbpigmente, in den erfindungsgemäßen Zusammensetzungen Verwendung finden.

Typische erfindungsgemäße Kleb- / Dichtstoffzusammensetzungen enthalten:

| | |
|---|---|
| 5 bis 30 Gew.% | eines verzweigten Polypropylenglycols mit Methyldialkoxysilylgruppen, |
| 5 bis 30 Gew.% | eines linearen Polypropylenglycols mit Methyldialkoxysilylgruppen, |
| 1 bis 10 Gew.% | eines amorphen Poly-α-olefins, Polyisobutylens oder eines modifizierten Polyolefinwachses mit Methyldialkoxysilylgruppen und / oder Trialkoxysilylgruppen, |
| 1 bis 15 Gew.% | eines paraffinischen, naphthenischen und / oder aromatischen Petroleumöls |
| 0,1 bis 5 Gew.% | eines oder mehrerer Haftvermittler, |
| 0 bis 60 Gew.%, | eines oder mehrerer Füllstoffe, |
| vorzugsweise 30 bis 60 | |
| Gew.%, | |
| 0 bis 2 Gew.%, vorzugsweise | eines Katalysators, |
| 0,05 bis 1,5 Gew.%, | |

wobei die Summe der Bestandteile 100 Gew.-% ergibt.

Die erfindungsgemäßen Zusammensetzungen können an sich in bekannter Weise in Mischaggregaten mit hoher Scherwirkung hergestellt werden, hierzu gehören z.B. Kneter, Planetenmischer, Planetendissolver, Innenmischer, so genannte "Banburymischer", Doppelschneckenextruder und ähnliche dem Fachmann bekannte Mischaggregate.

Die erfindungsgemäßen Zusammensetzungen eignen sich zur Verwendung als einkomponentige, feuchtigkeitshärtende elastische Kleb-/Dichtstoffe oder Beschichtungsstoffe, die auf Kunststoffsubstraten, lackierten Bauteilen sowie Kunststoffbeschichtungen ohne aufwendige Substratvorbehandlung eine sehr gute Haftung aufweisen und diese Haftung auch nach feuchte Alterung beibehalten. Weiterhin können diese einkomponentigen Kleb/Dichtstoffe auch mit einer wasserhaltigen zweiten Komponente zum Härten gebracht werden.

In den nachfolgenden Ausführungsbeispielen soll die Erfindung näher erläutert werden, wobei die Auswahl der Beispiele keine Beschränkung des Umfangs des Erfindungsgegenstandes darstellen sollen.

### Beispiele

In einem evakuierbaren Planetenmischer wurden die nachfolgend in Tabelle 1 aufgeführten erfindungsgemäßen Zusammensetzungen unter Vakuum solange gemischt, bis sie homogen waren. Falls nicht anders angegeben, sind alle Teile in den Beispielen Gewichtsteile.

Zur Haftungsprüfung wurden Klebstoffraupen auf die verschiedenen Substrate aufgebracht und anschließend für 7 Tage bei Normklima (23°C/50% relative Luftfeuchtigkeit) aushärten lassen und danach einem Schälversuch unterworfen. Weiterhin wurden ausgehärtete Raupen nach Schwitzwassertest auf Haftung überprüft. Der Schwitzwassertest ("SW") beinhaltete eine 7-tägige Lagerung bei 40°C und 98% relativer Luftfeuchtigkeit, gefolgt von einem Tag Normklimalagerung ("NK"). Eine weitere Alterungsprüfung erfolgte nach dem so genannten "Kataplasmatest" ("KP") in Anlehnung an die DIN-EN 29142.

Im Schälversuch wurde die Haftung wie folgt benotet:
- 1: Haftung in Ordnung, größer als 95 % Kohäsionsbruch
- 2: Haftung noch in Ordnung, 95 bis größer als 75 % Kohäsionsbruch
- 3: Haftung nicht in Ordnung, 75 bis größer als 25 % Kohäsionsbruch
- 4: Haftung nicht in Ordnung, kleiner als 25 % Kohäsionsbruch.

Um das gesamte Haftungsspektrum auf den verschieden Substarte vergleichen zu können, erfolgte eine Aufsummierung der einzelnen Haftungsnoten. Je niedriger diese Gesamtsumme ist, desto breiter ist das Haftungsspektrum der Zusammensetzung.

Die Tabelle 2 zeigt die guten mechanischen Werte der ausgehärteten Zusammensetzungen der erfindungsgemäßen Beispiele 1 bis 5.

Wie aus den Haftungsprüfungen in den Tabelle 3,4 und 5 ersichtlich, ist das Haftverhalten der erfindungsgemäßen Zusammensetzungen (Beispiele 1 bis 5), insbesondere nach Feuchtigkeitslagerung bzw. nach dem Kataplasmatest, deutlich besser als bei vergleichbaren Klebstoffen auf Basis von silanfunktionellen Polyoxyalkylen-Prepolymeren des bekannten Standes der Technik.

**Tabelle1 Beispiele 1 bis 5 (erfindungsgemäß)**

| Beispiel | 1 | 2 | 3 | 4 | 5 |
|---|---|---|---|---|---|
| silanfunktionelles Polyoxyalkylen-Prepolymer¹⁾ | 14,000 | 14,000 | 14,000 | 14,000 | 14,000 |
| silanfunktionelles Polyoxyalkylen-Prepolymer²⁾ | 10,000 | 14,500 | 14,500 | 14,500 | 14,500 |
| silanfunktionelles Polyolefin ³⁾ | 6,794 | 1,290 | 2,580 | 3,870 | 4,859 |
| unpolarer Weichmacher / Extenderöl⁴⁾ | 9,006 | 1,710 | 3,420 | 5,130 | 6,441 |
| Antioxidanslösung in Alkylsulfonester-Weichmacher | 1,200 | 1,200 | 1,200 | 1,200 | 1,200 |
| Kreide, gemahlen, gecoatet⁵⁾ | 47,000 | 47,000 | 47,000 | 47,000 | 47,000 |
| Thixotropiermittel, Rilanit | 2,000 | 2,000 | 2,000 | 2,000 | 2,000 |
| Titandioxid, Rutil-Typ | 6,200 | 6,200 | 6,200 | 6,200 | 6,200 |
| DINP⁶⁾ | 0,000 | 8,300 | 5,300 | 2,300 | 0,000 |
| 3-Glycidoxypropyltrimethoxysilan | 0,500 | 0,500 | 0,500 | 0,500 | 0,500 |
| Silancokondensat | 0,500 | 0,500 | 0,500 | 0,500 | 0,500 |
| Silan AMMO | 2,000 | 2,000 | 2,000 | 2,000 | 2,000 |
| Katalysatorlösung⁷⁾ | 0,800 | 0,800 | 0,800 | 0,800 | 0,800 |
| | | | | | |
| Summe | 100,000 | 100,000 | 100,000 | 100,000 | 100,000 |

| | | | | | |
|---|---|---|---|---|---|
| Anmerkungen 1) Bis[3-(Methyldimethoxysilyl)propyl]polyoxypropylen, Funktionalität > 2 2) Bis[3-(Methyldimethoxysilyl)propyl]polyoxypropylen, Funktionalität etwa 2 3) Poly-α-olefin mit Methyldialkoxysilylgruppen oder Trialkoxylsilylgruppen 4) paraffinisches Petroleumöl aus C18 - C21 Alkanen 5) mittlere Teilchengröße 5 µm 6) Lösung aus Dibutylzinndibutylat (58,3 Teile), Dioctylphthalat (34,7 Teile), Toluylsulfonylisocyanat (6,9 Teile) und Alkylsulfonester des Phenols (40 Teile) | | | | | |

**Tab. 2 mechanische Werte der ausgehärteten Zusammensetzungen**

| Beispiel | 1 | 2 | 3 | 4 | 5 |
|---|---|---|---|---|---|
| Hautbildezeit [min] | 6 | 15 | 20 | 20 | 15 |
| Shore- A Härte nach | | | | | |
| 1d NK | 12 | 16 | 17 | 17 | 19 |
| 7d NK | 39 | 39 | 42 | 45 | 46 |
| Durchhärtung der Raupe nach | | | | | |
| 1d NK [mml] | 1,8 | 2,4 | 2,3 | 2,3 | 2,2 |
| Zugversuch¹⁾ | | | | | |
| 10% Modul N/mm² 1d NK | 0,080 | 0,150 | 0,120 | 0,130 | 0,140 |
| 25% Modul N/mm² 1d NK | 0,240 | 0,310 | 0,290 | 0,290 | 0,300 |
| 50% Modul N/mm² 1d NK | 0,440 | 0,480 | 0,500 | 0,510 | 0,510 |
| 100% Modul N/mm² 1d NK | 0,590 | 0,620 | 0,660 | 0,680 | 0,670 |
| Reißfestigkeit N/mm² 1d NK | 0,700 | 0,720 | 0,840 | 0,850 | 0,780 |
| Dehnung % 1d NK | 193 | 169 | 210 | 196 | 159 |
| Zugversuch¹⁾ | | | | | |
| 10% Modul N/mm² 7d NK | 0,120 | 0,060 | 0,110 | 0,180 | 0,150 |
| 25% Modul N/mm² 7d NK | 0,320 | 0,220 | 0,320 | 0,370 | 0,380 |
| 50% Modul N/mm² 7d NK | 0,540 | 0,390 | 0,560 | 0,600 | 0,640 |
| 100% Modul N/mm² 7d NK | 0,700 | 0,710 | 0,800 | 0,840 | 0,850 |
| Reißfestigkeit N/mm² 7d NK | 0,780 | 0,920 | 0,930 | 0,990 | 1,000 |
| Dehnung % 7d NK | 164 | 210 | 165 | 183 | 184 |

| | | | | | |
|---|---|---|---|---|---|
| 1) gemäß DIN 53504 an S2-Stäben | | | | | |

**Tab. 3**

| | | | | | | |
|---|---|---|---|---|---|---|
| Raupenhaftung | | | | | | |

| Substrat | Beispiel 1 | | Vergleichsbeispiel 1 (Handelsprodukt) | | Vergleichsbeispiel 2 (Handelsprodukt) | |
|---|---|---|---|---|---|---|
| | NK | SW | NK | SW | NK | SW |
| ABS | 1 | 1 | 1 | 2 | 1 | 1 |
| Weich-PVC | 1 | 1 | 4 | 4 | 1 | 1 |
| Pulverlack SW 262 D (Akzo Nobel) | 1 | 1 | 1 | 4 | 4 | 4 |
| Pulverlack SW 206 D (Akzo Nobel) | 1 | 1 | 1 | 4 | 3 | 4 |
| Pulverlack mit Effektpigment | 1 | 1 | 1 | 4 | 4 | 4 |
| Polystyrol | 1 | 1 | 1 | 1 | 1 | 1 |
| | 6 | 6 | 9 | 19 | 6 | 15 |

| | | | | | | |
|---|---|---|---|---|---|---|
| NK = 7d 23°C/50% rh (relative humidity) SW = 7d 23°C/50% rh + 7d 40°C/98% rh + 1d 23°C/50% rh | | | | | | |

**Tab. 4**

| Kataplasmatest in Anlehnung DIN-EN 29142 | | | | |
|---|---|---|---|---|
| Raupenhaftung Substrate | Beispiel 1 | | Vergleichsbeispiel 3 (Handelsprodukt) | |
| | NK | KP | NK | KP |
| Alu elox E 6 EV 1 | 1 | 1 | 1 | 4 |
| Stahlblech roh | 1 | 1 | 1 | 3 |
| Stahlblech feuerverzinkt | 1 | 1 | 1 | 4 |
| Stahlblech elektrol. verz. | 1 | 1 | 3 | 4 |
| V2A 4301 | 1 | 1 | 1 | 4 |
| Alu 99,5 | 1 | 1 | 1 | 4 |
| Hart-PVC | 1 | 1 | 1 | 2 |
| GFK | 1 | 3 | 2 | 4 |
| Glas | 1 | 1 | 1 | 3 |
| | | | | |
| Summe | 9 | 11 | 12 | 32 |

| | | | | |
|---|---|---|---|---|
| NK Lagerung = 7d KP Lagerung = 7d NK + Kataplasma (7d 70°C, 1d -20°C, 1d NK) NK = 7d 23°C/50% rh SW = 7d 23°C/50% rh + 7d 70°C/100% rh + 1 d -20°C + 1 d 23°C/50% rh | | | | |

**Tabelle 5 Haftungsprüfung**

| **Beispiel** | **1** | | **2** | | **3** | | **4** | | **5** | |
|---|---|---|---|---|---|---|---|---|---|---|
| Substrate | NK | SW | NK | SW | NK | SW | NK | SW | NK | SW |
| Al Mg Si 0.5 | 4 | 1 | 4 | 1 | 4 | 1 | 4 | 1 | 4 | 1 |
| Al Mg Si 1 | 1 | 1 | 1 | 1 | 1 | 1 | 1 | 1 | 1 | 1 |
| Al Mg3 | 1 | 1 | 1 | 1 | 1 | 1 | 1 | 1 | 1 | 1 |
| Al Mg 4.5 Mn | 1 | 1 | | 1 | 1 | 1 | 1 | 1 | 1 | 1 |
| Al Cu Mq 1 | 1 | 1 | 1 | 1 | 1 | 1 | 1 | 1 | 1 | 1 |
| Al Zn Mg Cu 1.5 | 1 | 1 | 1 | 1 | | 1 | 1 | 1 | 1 | 1 |
| Alu elox E 6 EV 1 | 1 | 1 | 1 | 1 | | | | 1 | 1 | 1 |
| Kupfer SF Cu hh | 1 | 1 | 1 | 1 | 1 | 1 | 1 | 1 | 1 | 1 |
| Messinq MS/58 poliert | 1 | 1 | 1 | 1 | 1 | 1 | 1 | 1 | 1 | 1 |
| Stahlblech roh 1203 | 1 | 1 | 1 | 1 | 1 | 1 | 1 | 1 | 1 | 1 |
| Stahlblech feuerverzinkt | 1 | 1 | 1 | 1 | 1 | 1 | 1 | 1 | 1 | 1 |
| Stahlblech elektrolytisch verz. | 1 | 1 | 1 | 1 | 1 | 1 | 1 | 1 | 1 | 1 |
| V2A 4301 | 1 | 1 | | 1 | 1 | 1 | 1 | 1 | 1 | 1 |
| Aluminium 99,5 | 1 | 1 | 1 | 1 | 1 | 1 | 1 | 1 | 1 | 1 |
| | | | | | | | | | | |
| SUMME | 17 | 14 | 17 | 13 | 17 | 13 | 17 | 13 | 17 | 13 |
| | | | | | | | | | | |
| PA 6,6 natürlich Röschling | 1 | 1 | 1 | 1 | 1 | 1 | 1 | 1 | 1 | 1 |
| Makrolon / Bayer | 1 | 1 | 1 | 1 | 1 | 1 | 1 | 1 | 1 | 1 |
| Polystyrol / Metzeler | 1 | 1 | | | | | | | | |
| Hart PVC grau / Simona | 1 | 1 | 1 | 1 | 1 | 1 | 1 | 1 | 1 | 1 |
| Epoxidharz Glasfaser | 1 | 1 | 1 | 1 | 1 | 1 | 1 | 1 | 1 | 1 |
| Glas | 1 | 1 | 1 | 1 | 1 | 1 | 1 | 1 | 1 | 1 |
| | | | | | | | | | | |
| SUMME | 5 | 5 | 5 | 5 | 5 | 5 | 5 | 5 | 5 | 5 |
| | | | | | | | | | | |
| SUMME TOTAL | 22 | 19 | 22 | 18 | 22 | 18 | 22 | 18 | 22 | 18 |

| | | | | | | | | | | |
|---|---|---|---|---|---|---|---|---|---|---|
| NK Lagerung = 7d SW Lagerung = 7d NK + 7d SW | | | | | | | | | | |

## Patentansprüche

1. Einkomponentige, feuchtigkeitshärtende Kleb- / Dichtstoff-Zusammensetzung enthaltend
(a) mindestens ein silanfunktionelles Polyoxyalkylen-Prepolymer,
(b) mindestens ein silanfunktionelles Polyolefin und
(c) mindestens einen unpolaren Weichmacher, wobei das mindestens eine silanfunktionelle Polyoxyalkylen-Prepolymer auf der Basis von Polyethern ist.

2. Einkomponentige, feuchtigkeitshärtende Kleb- / Dichtstoff-Zusammensetzung nach Anspruch 1 enthaltend als unpolarer Weichmacher mindestens ein aliphatisches, aromatisches oder naphthenisches Petroleumöl.

3. Einkomponentige, feuchtigkeitshärtende Kleb- / Dichtstoff-Zusammensetzung nach Anspruch 1 oder 2 enthaltend zusätzlich mindestens einen Katalysator.

4. Einkomponentige, feuchtigkeitshärtende Kleb- / Dichtstoff-Zusammensetzung nach Anspruch 1 bis 3 enthaltend zusätzlich mindestens einen Füllstoff und/oder mindestens einen Haftvermittler.

5. Einkomponentige, feuchtigkeitshärtende Kleb- / Dichtstoff-Zusammensetzung nach Anspruch 1 bis 4, **dadurch gekennzeichnet, dass** das silanfunktionelle Polyoxyalkylen-Prepolymer ausgewählt wird aus linearen oder verzweigten Polypropylenglycolen mit Methyldialkoxysilylgruppen und / oder Trialkoxysilylgruppen oder deren Mischungen.

6. Einkomponentige, feuchtigkeitshärtende Kleb- / Dichtstoff-Zusammensetzung nach Anspruch 1 bis 5 **dadurch gekennzeichnet, dass** das silanfunktionelle Polyolefin ein amorphes Poly-α-olefin ein Polyisobutylen oder ein modifiziertes Polyolefinwachs mit Methyldialkoxysilylgruppen und / oder Trialkoxysilylgruppen ist.

7. Einkomponentige, feuchtigkeitshärtende Kleb- / Dichtstoff-Zusammensetzung nach Anspruch 1 bis 6 **dadurch gekennzeichnet, dass** der Haftvermittler ausgewählt wird aus 3-Glycidoxypropylalkoxysilan, 3-Mercaptopropylalkoxysilan, 3-Methacryloxypropylalkoxysilan, 3-Aminopropylalkoxysilan, N(2-Aminoethyl)-3-Aminopropylalkoxysilan, N-(2-Aminoethyl)-N'-(2-aminoethyl)-3-aminopropylmethyldiethoxysilan, Bis-(Triethoxysilylpropyl)-amin, Bis-(Trimethoxysilylpropyl)-amin, Vinylalkoxysilan, Cokondensate von aminofunktionellen Silanen oder Mischungen der vorgenannten Silane.

8. Einkomponentige, feuchtigkeitshärtende Kleb- / Dichtstoff-Zusammensetzung nach Anspruch 1 bis 7 enthaltend
(a) 5 bis 30 Gew.% eines verzweigten Polypropylenglycols mit Methyldialkoxysilylgruppen,
(b) 5 bis 30 Gew.% eines linearen Polypropylenglycols mit Methyldialkoxysilylgruppen,
(c) 1 bis 10 Gew.% eines amorphen Poly-α-olefins mit Methyldialkoxysilylgruppen und/ oder Trialkoxysilylgruppen,
(d) 1 bis 15 Gew.% eines paraffinischen, naphthenischen und / oder aromatischen Petroleumöls
(e) 0,1 bis 5 Gew.% eines oder mehrerer Haftvermittler,
(f) 0 bis 60 Gew.%, vorzugsweise 30 bis 60 Gew.%, eines oder mehrerer Füllstoffe,
(g) 0 bis 2 Gew.%, vorzugsweise 0,05 bis 1,5 Gew.%, eines Katalysators, wobei die Summe der Bestandteile 100 Gew.% ergibt.

9. Verwendung der Kleb- / Dichtstoff-Zusammensetzung nach Anspruch 1 bis 8 zur Verklebung und / oder Beschichtung und / oder Abdichtung von Kunststoffibauteilen oder lackierten Substraten ohne Vorbehandlung des Substrates.

## Claims

1. A monocomponent, moisture-hardening adhesive/sealant composition containing
(a) at least one silane-functional polyoxyalkylene prepolymer,
(b) at least one silane-functional polyolefin and
(c) at least one apolar plasticizer, wherein the at least one silane-functional polyoxyalkylene prepolymer is based on polyethers.

2. The monocomponent, moisture-hardening adhesive/sealant composition according to claim 1 containing as an apolar plasticizer at least one aliphatic, aromatic or naphthenic petroleum oil.

3. The monocomponent, moisture-hardening adhesive/sealant composition according to claim 1 or 2 further containing at least one catalyst.

4. The monocomponent, moisture-hardening adhesive/sealant composition according to claims 1 to 3 further containing at least one filler and/or at least one adhesion promoter.

5. The monocomponent, moisture-hardening adhesive/sealant composition according to claims 1 to 4, **characterized in that** the silane-functional polyoxyalkylene prepolymer is selected from linear or branched polypropylene glycols having methyldialkoxysilyl groups and or trialkoxysilyl groups or their mixtures.

6. The monocomponent, moisture-hardening adhesive/sealant composition according to claims 1 to 5, **characterized in that** the silane-functional polyolefin is an amorphous poly-α-olefin, a polyisobutylene, or a modified polyolefin wax having methyldialkoxysilyl groups and/or trialkoxysilyl groups.

7. The monocomponent, moisture-hardening adhesive/sealant composition according to claims 1 to 6, **characterized in that** the adhesion promoter is selected from 3-glycidoxypropylalkoxysilane, 3-mercaptopropylalkoxysilane, 3-methacryloxypropylalkoxysilane, 3-aminopropylalkoxysilane, N-(2-aminoethyl)-3-aminopropylalkoxysilane, N-(2-aminoethyl)-N'-(2-aminoethyl)-3-aminopropylmethyldiethoxysilane, bis-(triethoxysilyl-propyl)amine, bis-(trimethoxysilylpropyl)-amine, vinylalkoxysilane, co-condensates of amino-functional silanes or mixtures of the aforementioned silanes.

8. The monocomponent, moisture-hardening adhesive/sealant composition according to claims 1 to 7, containing
(a) 5 to 30 % by weight of a branched polypropylene glycol with methyldialkoxysilyl groups,
(b) 5 to 30 % by weight of a linear polypropylene glycol with methyldialkoxysilyl groups,
(c) 1 to 10 % by weight of an amorphous poiy-α-olefin with methyldialkoxysilyl groups and/or trialkoxysilyl groups,
(d) 1 to 15 % by weight of a paraffinic, naphthenic and/or aromatic petroleum oil.
(e) 0.1 to 5 % by weight of one or more adhesion promoters,
(f) 0 to 60 % by weight, preferably 30 to 60 % by weight, of one or more fillers,
(g) 0 to 2 % by weight, preferably 0.05 to 1.5 % by weight, of a catalyst,
wherein the sum of the constituents is 100%.

9. Use of the adhesive/sealant composition according to claims 1 to 8 for adhesive bonding and/or coating and/or sealing plastic parts or painted substrates without pretreatment of the substrate.

## Revendications

1. Composition adhésive/d'étanchéité à un composant, durcissant sous l'effet de l'humidité, contenant
(a) au moins un prépolymère de polyoxyalkylène à fonctionnalité silane,
(b) au moins une polyoléfine à fonctionnalité silane, et
(c) au moins un plastifiant non polaire, dans laquelle l'au moins un prépolymère de polyoxyalkylène à fonctionnalité silane est basé sur des polyéthers.

2. Composition adhésive/d'étanchéité à un composant, durcissant sous l'effet de l'humidité selon la revendication 1, contenant comme plastifiant non polaire au moins une huile de pétrole aliphatique, aromatique ou naphténique.

3. Composition adhésive/d'étanchéité à un composant, durcissant sous l'effet de l'humidité selon la revendication 1 ou 2, contenant en outre au moins un catalyseur.

4. Composition adhésive/d'étanchéité à un composant, durcissant sous l'effet de l'humidité selon les revendications 1 à 3, contenant en outre au moins une charge et/ou au moins un promoteur d'adhérence.

5. Composition adhésive/d'étanchéité à un composant, durcissant sous l'effet de l'humidité selon les revendications 1 à 4, **caractérisée en ce que** le prépolymère de polyoxyalkylène à fonctionnalité silane est choisi parmi les polypropylèneglycols linéaires ou ramifiés avec des groupes méthyldialcoxysilyle et/ou trialcoxysilyle ou leurs mélanges.

6. Composition adhésive/d'étanchéité à un composant, durcissant sous l'effet de l'humidité selon les revendications 1 à 5, **caractérisée en ce que** la polyoléfine à fonctionnalité silane est une poly-α-oléfine amorphe, un polyisobutylène ou une cire de polyoléfine modifiée avec des groupes méthyldialcoxysilyle et/ou trialcoxysilyle.

7. Composition adhésive/d'étanchéité à un composant, durcissant sous l'effet de l'humidité selon les revendications 1 à 6, **caractérisée en ce que** le promoteur d'adhérence est choisi parmi le 3-glycidoxypropylalcoxysilane, le 3-mercaptopropylalcoxysilane, le 3-méthacryloxypropylalcoxysilane, le 3-aminopropylalcoxysilane, le N(2-aminoéthyl)-3-aminopropylalcoxysilane, le N-(2-aminoéthyl)-N'-(2-aminoéthyl)-3-aminopropylméthyldiéthoxysilane, la bis-(triéthoxysilylpropyl)-amine, la bis-(triméthoxysilylpropyl)-amine, le vinylalcoxysilane, les produits de cocondensation de silanes à fonctionnalité amino ou les mélanges des silanes susmentionnés.

8. Composition adhésive/d'étanchéité à un composant, durcissant sous l'effet de l'humidité selon la revendication 1 à 7, contenant
(a) 5 à 30% en poids d'un polypropylèneglycol ramifié avec des groupes méthyldialcoxysilyle,
(b) 5 à 30% en poids d'un polypropylèneglycol linéaire avec des groupes méthyldialcoxysilyle,
(c) 1 à 10% en poids d'une poly-α-oléfine amorphe avec des groupes méthyldialcoxysilyle et/ ou trialcoxysilyle,
(d) 1 à 15% en poids d'une huile de pétrole paraffinique, naphténique et/ou aromatique
(e) 0,1 à 5% en poids d'un ou de plusieurs promoteurs d'adhérence,
(f) 0 à 60% en poids, de préférence 30 à 60% en poids d'une ou de plusieurs charges,
(g) 0 à 2% en poids, de préférence 0,05 à 1,5% en poids, d'un catalyseur, la somme des constituants valant 100% en poids.

9. Utilisation de la composition adhésive/d'étanchéité selon la revendication 1 à 8 pour le collage et/ou le revêtement et/ou l'étanchéification de pièces en matériau synthétique ou de substrats laqués sans prétraitement du substrat.
